# EUROPEAN PATENT APPLICATION

(11) **EP 4 625 914 A1**
(43) Date of publication of application: **01.10.2025**
(21) Application number: 22969000.3
(22) Date of filing: 23.12.2022
(51) Int. Cl.: H04L 27/00

(54) **SIGNAL PROCESSING METHOD AND COMMUNICATION APPARATUS**

(71) Applicant: Huawei Technologies Co., Ltd., Shenzhen, Guangdong 518129 (CN)
(72) Inventor: ZHANG, Jian, Shenzhen, Guangdong 518129 (CN); WANG, Haiyang, Shenzhen, Guangdong 518129 (CN); WU, Suwen, Shenzhen, Guangdong 518129 (CN); FU, Hongliang, Shenzhen, Guangdong 518129 (CN)
(74) Representative: Gill Jennings & Every LLP
(86) International application number: PCT/CN2022/141508
(87) International publication number: WO 2024/130713

(57) **Abstract**

This application provides a signal processing method and a communication apparatus. The method may be performed by a first apparatus. The method may include: receiving first information, where the first information indicates to perform first processing on a first signal transmitted on a first resource unit, and the first signal is used to estimate a downlink channel state; and performing the first processing on the first signal, and performing second processing on a second signal transmitted on a second resource unit, where the second signal is used to estimate an uplink channel state, the second processing includes processing for suppressing a passive intermodulation interference signal in the second signal, and the first processing and the second processing are different processing manners. In this way, the first apparatus can use different processing manners for the first signal used for the downlink channel state and the second signal used for the uplink channel state, so that signal processing flexibility can be improved.

## Description

### TECHNICAL FIELD

This application relates to the communication field, and more specifically, to a signal processing method and a communication apparatus.

### BACKGROUND

A passive device in a signal transmit channel generates a passive intermodulation (passive intermodulation, PIM) interference signal, and the PIM interference signal may enter a signal receive channel. This increases noise in the signal receive channel and reduces quality of a wireless communication system. Therefore, currently, when receiving a signal in the receive channel, a radio frequency unit performs processing for suppressing a PIM interference signal.

### SUMMARY

This application provides a signal processing method and a communication apparatus, to improve signal processing flexibility.

According to a first aspect, this application provides a signal processing method. The method may be performed by a first apparatus, or may be performed by a chip or a circuit configured in the first apparatus. This is not specially limited in this application. For ease of description, the following uses an example in which the method is performed by the first apparatus for description.

The method may include: receiving first information, where the first information indicates to perform first processing on a first signal transmitted on a first resource unit, and the first signal is used to estimate a downlink channel state; and performing the first processing on the first signal, and performing second processing on a second signal transmitted on a second resource unit, where the second signal is used to estimate an uplink channel state, the second processing includes processing for suppressing a passive intermodulation interference signal in the second signal, and the first processing and the second processing are different processing manners.

Based on this technical solution, the first information may indicate the first apparatus to perform the first processing on the first signal used to estimate the downlink channel state, so that the first apparatus does not process all signals in a uniform manner. In other words, the first apparatus can use different processing manners for the first signal used for the downlink channel state and the second signal used for the uplink channel state, for example, the second processing includes the processing for suppressing the passive intermodulation interference signal in the second signal, so that signal processing flexibility can be improved.

With reference to the first aspect, in some implementations of the first aspect, the first processing does not include processing for suppressing a passive intermodulation interference signal in the first signal.

Based on this technical solution, because a passive intermodulation interference signal mainly exists on an uplink channel, the first apparatus may perform processing for suppressing the passive intermodulation interference signal in the second signal, and does not perform processing for suppressing the passive intermodulation interference signal in the first signal, to avoid a case in which a downlink channel state estimation result is inaccurate because the first apparatus uniformly performs processing for suppressing passive intermodulation interference signals in all signals.

With reference to the first aspect, in some implementations of the first aspect, the first resource unit and the second resource unit include at least one same sub-frequency unit in frequency domain.

For example, a plurality of symbols in each of a plurality of radio frames may be divided into the first resource unit and the second resource unit, the plurality of symbols in each radio frame respectively correspond to a plurality of sub-frequency units, and some symbols in one or more radio frames may be divided into the first resource unit. In this case, the symbols in one or more other radio frames may be divided into the second resource unit, so that frequency domain positions of sub-frequency units corresponding to the symbols are in both a first frequency unit and a second frequency unit.

It may be understood that the at least one same sub-frequency unit may respectively correspond to different time units.

Based on this technical solution, for a frequency domain position with a high priority or good performance, the first resource unit and the second resource unit each may include a sub-frequency unit at the frequency domain position, so that an uplink channel state estimation result and a downlink channel state estimation result each include a measurement result of a signal on the sub-frequency unit, to improve accuracy of channel estimation.

Optionally, a measurement resource includes the first resource unit and the second resource unit, the measurement resource includes a plurality of sub-frequency units in frequency domain, the first resource unit includes the plurality of sub-frequency units in frequency domain, and the second resource unit includes the plurality of sub-frequency units in frequency domain.

Based on this technical solution, the first resource unit and the second resource unit each may traverse all the sub-frequency units included in the measurement resource, so that accuracy of channel estimation can be improved.

With reference to the first aspect, in some implementations of the first aspect, the method further includes: performing downlink channel state estimation based on a first signal obtained through the first processing; and performing uplink channel state estimation based on a second signal obtained through the second processing.

Based on this technical solution, the first apparatus may be used as an execution body of uplink channel state estimation and downlink channel state estimation.

With reference to the first aspect, in some implementations, the method further includes: sending a first signal obtained through the first processing and a second signal obtained through the second processing.

Based on this technical solution, the first apparatus may send the first signal obtained through the first processing and the second signal obtained through the second processing to another apparatus, for example, a second apparatus. The second apparatus is used as an execution body of uplink channel state estimation and downlink channel state estimation.

With reference to the first aspect, in some implementations of the first aspect, the first resource unit and the second resource unit are determined based on at least one of the following information: a quantity of accessed users, a periodicity of the first signal, a periodicity of the second signal, a data amount of uplink data, and a data amount of downlink data.

Based on this technical solution, the first resource unit and the second resource unit may be flexibly divided based on a plurality of types of information.

Optionally, a ratio of the first resource unit to the second resource unit is determined based on at least one of the foregoing information. Optionally, a granularity for dividing the first resource unit and the second resource unit is determined based on at least one of the foregoing information.

With reference to the first aspect, in some implementations of the first aspect, the first information indicates a time domain position and a frequency domain position of the first resource unit, and a time domain position and a frequency domain position of the second resource unit.

With reference to the first aspect, in some implementations of the first aspect, the first signal includes a first sounding reference signal, and the second signal includes a second sounding reference signal.

According to a second aspect, this application provides a signal processing method. The method may be performed by a second apparatus, or may be performed by a chip or a circuit configured in the second apparatus. This is not specially limited in this application. For ease of description, the following uses an example in which the method is performed by the second apparatus for description.

The method may include: generating first information, where the first information indicates to perform first processing on a first signal transmitted on a first resource unit, the first signal is used to estimate a downlink channel state, the first processing and second processing on a second signal transmitted on a second resource unit are different processing manners, the second signal is used to estimate an uplink channel state, and the second processing includes processing for suppressing a passive intermodulation interference signal in the second signal; and sending the first information.

For descriptions of beneficial effects of the second aspect, refer to the descriptions of the first aspect. Details are not described herein again.

With reference to the second aspect, in some implementations of the second aspect, the first processing does not include processing for suppressing a passive intermodulation interference signal in the first signal.

With reference to the second aspect, in some implementations of the second aspect, the first resource unit and the second resource unit include at least one same sub-frequency unit in frequency domain.

With reference to the second aspect, in some implementations of the second aspect, the method further includes: receiving a first signal obtained through the first processing and a second signal obtained through the second processing; performing downlink channel state estimation based on the first signal obtained through the first processing; and performing uplink channel state estimation based on the second signal obtained through the second processing.

With reference to the second aspect, in some implementations of the second aspect, the first resource unit and the second resource unit are determined based on at least one of the following information: a quantity of accessed users, a periodicity of the first signal, a periodicity of the second signal, a data amount of uplink data, and a data amount of downlink data.

With reference to the second aspect, in some implementations of the second aspect, the first information indicates a time domain position and a frequency domain position of the first resource unit, and a time domain position and a frequency domain position of the second resource unit.

With reference to the second aspect, in some implementations of the second aspect, the first signal includes a first sounding reference signal, and the second signal includes a second sounding reference signal.

According to a third aspect, this application provides a signal processing method. The method may be performed by a first apparatus and a second apparatus, or may be performed by a chip or a circuit configured in the first apparatus and a chip or a circuit configured in the second apparatus. This is not specially limited in this application. For ease of description, the following uses an example in which the method is performed by the first apparatus and the second apparatus for description.

The method includes: The second apparatus generates first information, where the first information indicates to perform first processing on a first signal transmitted on a first resource unit, and the first signal is used to estimate a downlink channel state. The second apparatus sends the first information to the first apparatus. The first apparatus performs the first processing on the first signal, and performs second processing on a second signal transmitted on a second resource unit, where the second signal is used to estimate an uplink channel state, the second processing includes processing for suppressing a passive intermodulation interference signal in the second signal, and the first processing and the second processing are different processing manners.

For implementations and beneficial effects of the third aspect, refer to the related descriptions in the first aspect and the second aspect. Details are not described herein again.

With reference to the third aspect, in some implementations of the third aspect, the method further includes: The first apparatus performs downlink channel state estimation based on a first signal obtained through the first processing. The first apparatus performs uplink channel state estimation based on a second signal obtained through the second processing.

With reference to the third aspect, in some implementations of the third aspect, the method further includes: The first apparatus sends, to the second apparatus, a first signal obtained through the first processing and a second signal obtained through the second processing. The second apparatus performs downlink channel state estimation based on the first signal obtained through the first processing. The second apparatus performs uplink channel state estimation based on the second signal obtained through the second processing.

According to a fourth aspect, a communication apparatus is provided. The apparatus is configured to perform the method provided in the first aspect or the second aspect. Specifically, the apparatus may include a unit and/or a module, for example, a processing unit and/or a communication unit, that are/is configured to perform the method provided in any one of the foregoing implementations of the first aspect or the second aspect. The communication apparatus may be a first apparatus, or may be a second apparatus.

In an implementation, the apparatus is a communication device. When the apparatus is the communication device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a communication device. When the apparatus is the chip, the chip system, or the circuit used in a terminal device, the communication unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

According to a fifth aspect, a communication apparatus is provided. The apparatus includes at least one processor, coupled to at least one memory. The at least one processor is configured to execute a computer program or instructions stored in the at least one memory, to perform the method provided in any one of the foregoing implementations of the first aspect or the second aspect. The communication apparatus may be a first communication apparatus, or may be a second communication apparatus.

The communication device may further include an input/output circuit.

Optionally, the apparatus includes the at least one memory. In an implementation, the apparatus is a communication device.

In another implementation, the apparatus is a chip, a chip system, or a circuit used in the communication device.

According to a sixth aspect, this application provides a processor, configured to perform the methods provided in the foregoing aspects.

Operations such as sending and obtaining/receiving related to the processor may be understood as operations such as output and input of the processor, or may be understood as sending and receiving operations performed by a radio frequency circuit and an antenna, unless otherwise specified, or provided that the operations do not contradict actual functions or internal logic of the operations in related descriptions. This is not limited in this application.

According to a seventh aspect, a computer-readable storage medium is provided. The computer-readable medium stores program code executed by a device, and the program code is used to perform the method provided in any one of the implementations of the first aspect or the second aspect.

According to an eighth aspect, a computer program product including instructions is provided. When the computer program product runs on a computer, the computer is enabled to perform the method provided in any one of the implementations of the first aspect or the second aspect.

According to a ninth aspect, a chip is provided. The chip includes a processor and a communication interface. The processor reads, through the communication interface, instructions stored in a memory, to perform the method provided in any one of the implementations of the first aspect or the second aspect.

Optionally, in an implementation, the chip further includes the memory, the memory stores a computer program or the instructions, and the processor is configured to execute the computer program or the instructions stored in the memory. When the computer program or the instructions are executed, the processor is configured to perform the method provided in any one of the implementations of the first aspect or the second aspect.

According to a tenth aspect, a communication system is provided, including the foregoing first apparatus and/or second apparatus.

### BRIEF DESCRIPTION OF DRAWINGS

FIG. 1 is a diagram of a possible and non-limiting system to which this application is applicable;
FIG. 2 is a diagram of an access network system to which this application is applicable;
FIG. 3 is a schematic flowchart of a signal processing method according to an embodiment of this application;
FIG. 4 is a diagram of a first possible structure of division of a first resource unit and a second resource unit according to an embodiment of this application;
FIG. 5 is a diagram of a second possible structure of division of a first resource unit and a second resource unit according to an embodiment of this application;
FIG. 6 is a diagram of a third possible structure of division of a first resource unit and a second resource unit according to an embodiment of this application; and
FIG. 7 to FIG. 9 are diagrams of structures of possible communication apparatuses according to embodiments of this application.

### DESCRIPTION OF EMBODIMENTS

The following describes technical solutions of embodiments of this application with reference to the accompanying drawings.

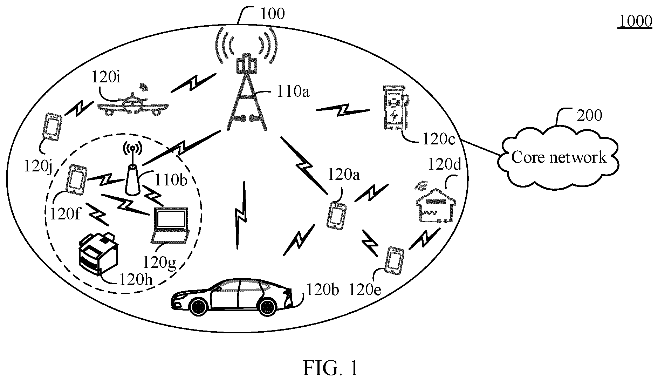

FIG. 1 is a diagram of a possible and non-limiting system to which this application is applicable. As shown in FIG. 1, a communication system 1000 includes a radio access network (radio access network, RAN) 100 and a core network (core network, CN) 200. The RAN 100 includes at least one RAN node (for example, 110a and 110b in FIG. 1, which are collectively referred to as 110) and at least one terminal (for example, 120a to 120j in FIG. 1, which are collectively referred to as 120). The RAN 100 may also include another RAN node, for example, a wireless relay device and/or a wireless backhaul device (not shown in FIG. 1). The terminal 120 is connected to the RAN node 110 in a wireless manner. The RAN node 110 is connected to the core network 200 in a wireless or wired manner. A core network device in the core network 200 and the RAN node 110 in the RAN 100 may be respectively different physical devices, or may be a same physical device that integrates a logical function of the core network and a logical function of the radio access network.

The RAN 100 may be a cellular system related to a 3rd generation partnership project (3rd generation partnership project, 3GPP), for example, a 4G mobile communication system, a 5G mobile communication system, or a future-oriented evolved system (for example, a 6G mobile communication system). Alternatively, the RAN 100 may be an open access network (open RAN, O-RAN, or ORAN) or a cloud radio access network (cloud radio access network, CRAN). Alternatively, the RAN 100 may be a communication system that integrates the foregoing two or more systems.

The RAN node 110 may also be referred to as an access network device, a RAN entity, an access node, or the like sometimes, and constitutes a part of the communication system, to help the terminal implement radio access. The plurality of RAN nodes 110 in the communication system 1000 may be nodes of a same type, or may be nodes of different types. In some scenarios, roles of the RAN node 110 and the terminal 120 are relative. For example, a network element 120i in FIG. 1 may be a helicopter or an uncrewed aerial vehicle, and may be configured as a mobile base station. For the terminal 120j that accesses the RAN 100 by using the network element 120i, the network element 120i is a base station. However, for a base station 110a, the network element 120i is a terminal. The RAN node 110 and the terminal 120 are referred to as communication apparatuses sometimes. For example, network elements 110a and 110b in FIG. 1 may be understood as communication apparatuses having a base station function, and network elements 120a to 120j may be understood as communication apparatuses having a terminal function.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation NodeB in a 6th generation (6th generation, 6G) mobile communication system, an access node in a base station in a future mobile communication system, or the like. The RAN node may be a macro base station (for example, 110a in FIG. 1), a micro base station or an indoor station (for example, 110b in FIG. 1), a relay node or a donor node, or a radio controller in a CRAN scenario. Optionally, the RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU).

In another possible scenario, a plurality of RAN nodes coordinate to assist a terminal in implementing radio access, and different RAN nodes separately implement some functions of a base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings of the names. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of the software module and the hardware module.

The terminal may also be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IOT), virtual reality, augmented reality, industrial control, self-driving, telemedicine, a smart grid, smart furniture, a smart office, a smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a mechanical arm, a smart home device, or the like. A device form of the terminal is not limited in embodiments of this application.

There is an interface between the DU and the RU. The interface between the DU and the RU may be a common public radio interface (common public radio interface, CPRI) or an enhanced common public radio interface (enhanced common public radio interface, eCPRI) based on different functions of the DU and the RU and/or different split manners of the DU and the RU.

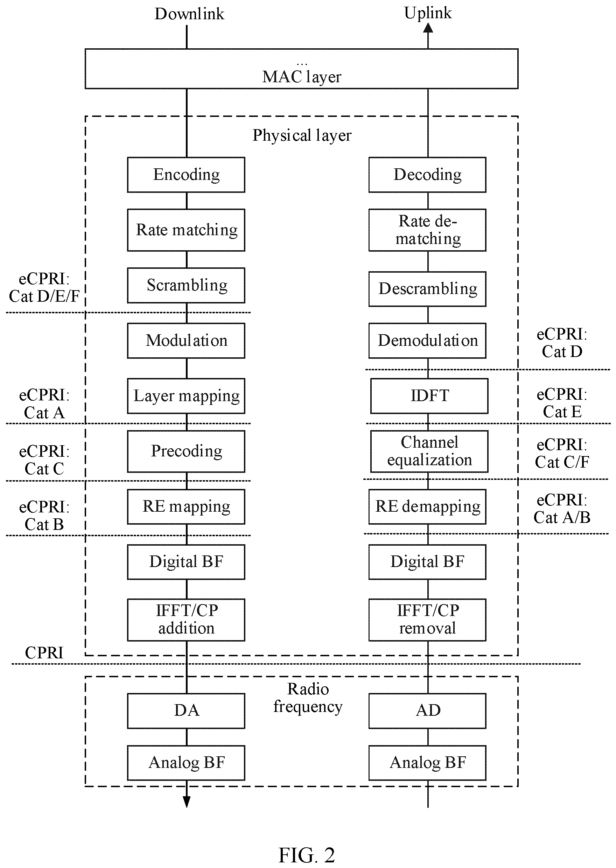

FIG. 2 is a diagram of an access network system. An access network device includes one or more functional modules, configured to implement signal processing. As shown in FIG. 2, a physical layer function is used as an example. The access network device includes one or more of the following functions: encoding, rate matching, scrambling, modulation, layer mapping, precoding, resource element (resource element, RE) mapping, digital beamforming (beamforming, BF), inverse fast Fourier transform (inverse fast Fourier transform, IFFT)/cyclic prefix (cyclic prefix, CP) addition, decoding, rate de-matching, descrambling, demodulation, inverse discrete Fourier transform (inverse discrete Fourier transform, IDFT), channel equalization (or channel estimation), RE demapping, digital BF. fast Fourier transform (fast Fourier transform, FFT)/CP removal, digital-to-analog (digital-to-analog, DA) conversion, analog BF (uplink direction), analog-to-digital (analog-to-digital, AD) conversion, or analog BF (downlink direction).

The one or more functional modules may be implemented by software, hardware, or a combination of software and hardware. Physically, the functional modules may be discrete or integrated. It may be understood that the functional modules are merely examples. The access network device may include more other modules (for example, a scheduling module, a power control module, a hybrid automatic repeat request (hybrid automatic repeat request, HARQ) module, a traffic control module, a mobility management module, or an artificial intelligence (artificial intelligence, AI) module) based on a design, or may not include a functional module shown in FIG. 2 (for example, may not include a digital BF module). The access network device further includes a fronthaul (fronthaul, FH) interface between the DU and the RU, to implement communication between the DU and the RU. The fronthaul interface includes but is not limited to the CPRI or the eCPRI. In a possible implementation, the DU is located in the BBU, the RU is located in the RRU/AAU/RRH, and an interface between the BBU and the RRU/AAU/RRH may also be referred to as the fronthaul interface. To implement the fronthaul interface, the BBU and the RRU/AAU/RRH may be connected via a fronthaul network, or the DU and the RU may be connected via the fronthaul network. For example, the fronthaul network includes but is not limited to an optical fiber direct connection network and a wavelength division network.

The access network device may support fronthaul interfaces of one or more types. Different fronthaul interfaces respectively correspond to DUs and RUs having different functions. As shown in FIG. 2, if the fronthaul interface between the DU and the RU is the CPRI, the DU is configured to implement one or more of baseband functions, and the RU is configured to implement one or more of radio frequency functions. If the fronthaul interface between the DU and the RU is the eCPRI, in comparison with the CPRI, some downlink and/or uplink baseband functions are moved from the DU to the RU for implementation. Different manners of splitting the DU and the RU correspond to different categories (categories, Cat for short) of eCPRIs. FIG. 2 shows six eCPRI examples, which are represented by using Cat A, B, C, D, E, and F (which may also be represented as Option A to F, Option 1 to 6, or in another manner). It may be understood that there may be another splitting manner between the DU and the RU, that is, there may be another category of eCPRI.

The eCPRI Cat A is used as an example. For downlink transmission, splitting is performed based on the layer mapping. The DU is configured to implement one or more functions in the layer mapping and functions before the layer mapping (that is, one or more of the encoding, the rate matching, the scrambling, the modulation, and the layer mapping), and another function (for example, the RE mapping, the digital BF, or the IFFT/CP addition) after the layer mapping is moved to the RU for implementation. For uplink transmission, splitting is performed based on the RE demapping. The DU is configured to implement one or more functions in the demapping and functions before the demapping (that is, one or more of the decoding, the rate de-matching, the descrambling, the demodulation, the IDFT, the channel equalization, and the RE demapping), and another function (for example, one or more of the digital BF or the FFT/CP removal) after the demapping is moved to the RU for implementation.

Similarly, the eCPRIs Cat B, Cat C, Cat D, Cat E, and Cat F respectively correspond to different manners of splitting the DU and the RU. A splitting point and a function before the splitting point are implemented by the DU, and a function after the splitting point is implemented by the RU. For splitting points of various categories of eCPRIs, refer to FIG. 2. Details are not described one by one again. For example, for the eCPRI Cat B, the RE mapping is used for splitting of downlink transmission, and the RE demapping is used for splitting of uplink transmission. For the uplink transmission, the RE mapping and functions before the RE mapping are implemented by the DU, and functions after the RE mapping and the radio function are implemented by the RU. For the downlink transmission, the RE demapping and functions before the RE demapping are implemented by the DU, and functions after the RE demapping and the radio function are implemented by the RU.

Splitting manners of eCPRIs may be symmetric for an uplink and a downlink, for example, the eCPRIs Cat B and Cat C shown in FIG. 2. Alternatively, splitting manners of eCPRIs may be asymmetric for an uplink and a downlink, for example, the eCPRIs Cat A, Cat D, Cat E, and Cat F shown in FIG. 2. This is not limited. Optionally, for the uplink and/or the downlink, different splitting manners may be configured for different channels or different channel groups, that is, different categories of eCPRIs are configured. One group of channels may include one or more channels.

In a possible design, the DU is located in the BBU, the RU is located in the RRU/AAU/RRH, a processing unit configured to implement a baseband function in the BBU is referred to as a baseband high (baseband high, BBH) layer unit, and a processing unit configured to implement a baseband function in the RRU/AAU/RRH is referred to as a baseband lower (baseband low, BBL) layer unit.

For ease of understanding of embodiments of this application, the following describes some terms in embodiments of this application.

### 1. Passive intermodulation (passive intermodulation, PIM) interference signal

PIM is a frequency-mixed interference signal of two or more radio frequency signals in a radio frequency signal path caused by nonlinear characteristics of various passive devices (for example, an antenna, a cable, or a connector). Non-linearity of the passive devices causes generation of higher-order harmonic waves relative to an operating frequency. These harmonic waves and the operating frequency are mixed to generate a new group of frequency combinations, and finally a group of useless spectrum components is generated and affects normal operation of a communication system. For example, a PIM interference signal generated by a passive device in a signal transmit channel enters a signal receive channel. This increases noise in the signal receive channel, and reduces quality of a wireless communication system.

The access network device may estimate the PIM interference signal in the receive channel in real time. In this case, the PIM interference signal includes two components: an interference signal generated in the transmit channel, and an interference signal (which may also be referred to as an uplink neighboring cell interference signal) generated by an uplink signal in a neighboring cell in the receive channel. The access network device may suppress or eliminate the PIM interference signal in the receive channel. For example, because the uplink neighboring cell interference signal is usually directional, for example, the uplink neighboring cell interference signal is a signal received by an antenna in a specific direction, some components of the PIM interference signal estimated by the access network device are also directional. In this way, the access network device may suppress a PIM interference signal in a receive signal by eliminating a signal in a specific direction.

### 2. Uplink channel estimation and downlink channel estimation

The access network device may separately estimate an uplink channel state and a downlink channel state by using a measurement result of a reference signal, select, based on an uplink channel estimation result, a preferred uplink beam for uplink data transmission, and select, based on a downlink channel estimation result, a preferred downlink beam for downlink data transmission. When the reference signal is an uplink signal, for example, an uplink sounding reference signal (SRS), the access network device measures the uplink SRS. When the uplink SRS is used to estimate the uplink channel state, the uplink SRS may be used to estimate uplink channel frequency domain information, schedule an uplink frequency domain resource, and the like. When the uplink SRS is used to estimate the downlink channel state, based on reciprocity between an uplink channel and a downlink channel, the uplink SRS may be used for weight value calculation, beamforming, and the like. The weight value calculation may be that the access network device performs downlink precoding matrix calculation based on a measurement result of an SRS, and determines a precoding matrix used for downlink transmission.

It should be noted that a "first apparatus" in embodiments of this application may be the CU (or the CU-CP or the CU-UP) or the DU described above, may be a module (for example, a PIM suppression module) in the CU or the DU, or may be another apparatus that is defined in the future and that has a corresponding function. This is not specially limited in this application. A "second apparatus" in embodiments of this application may be the RU described above, may be a module (for example, an SRS allocation module) in the RU, or may be another apparatus that is defined in the future and that has a corresponding function. This is not specially limited in this application. The following describes a signal processing method provided in this application by using an example in which the method is performed by the first apparatus and the second apparatus.

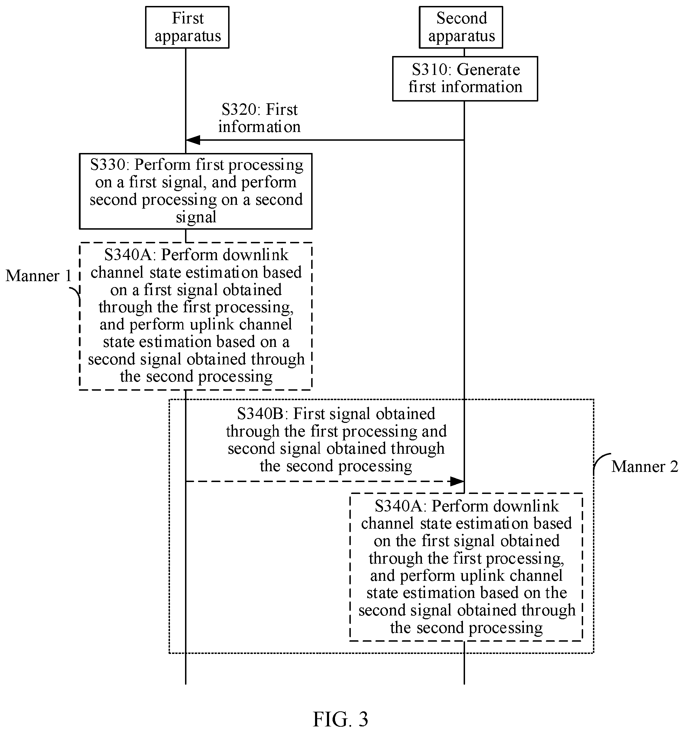

FIG. 3 is a schematic flowchart of signal processing according to this application.

S310: The second apparatus generates first information.

The first information indicates to perform first processing on a first signal transmitted on a first resource unit, and the first signal is used to estimate a downlink channel state.

The first information may indicate the first apparatus to perform the first processing on the first signal used to estimate the downlink channel state. The first processing and second processing on a second signal transmitted on a second resource unit are different processing manners. The second signal is used to estimate an uplink channel state. Therefore, the first apparatus performs the first processing on the first signal based on the first information, that is, the first apparatus can use different processing manners for signals with different functions, so that signal processing flexibility can be improved.

The second processing includes processing for suppressing a PIM interference signal in the second signal, and the first processing may not include processing for suppressing a PIM interference signal in the first signal. In other words, the second apparatus may determine to use different processing manners for the first signal used to estimate the downlink channel state and the second signal used to estimate the uplink channel state. Because a PIM interference signal mainly exists on an uplink channel, the second apparatus may determine to perform processing for suppressing the PIM interference signal in the second signal and not to perform processing for suppressing the PIM interference signal in the first signal, and may indicate, by using the first information, the first apparatus not to perform processing for suppressing the PIM interference signal in the first signal, to avoid a case in which a downlink channel state estimation result is inaccurate because the first apparatus uniformly performs processing for suppressing PIM interference signals in all signals.

It may be understood that, the first resource unit may include a time-frequency resource used to transmit the first signal. The first resource unit may be represented by using a time domain position and a frequency domain position of the time-frequency resource. For example, the time domain position may be represented by using a frame number, a subframe number, a slot number, a symbol number, or the like, and the frequency domain position may be represented by using a comb number, a resource block (resource block, RB) index, or the like. The comb number is an index of a comb (comb) defined in a standard protocol. One symbol may be split into a plurality of combs in frequency domain. The comb number may indicate a frequency domain position of a first frequency unit, for example, a frequency of a subband (subband). Similarly, the second resource unit may include a time-frequency resource used to transmit the second signal. The second resource unit may also be represented by using a time domain position and a frequency domain position of the time-frequency resource. Details are not described herein.

Optionally, the first signal includes a first SRS, and the second signal includes a second SRS. For example, the first signal and the second signal may be SRSs transmitted on SRS resources allocated by the second apparatus to a user. When allocating the SRS resources to the user, the second apparatus may configure an SRS signal (namely, the first SRS in this embodiment of this application) transmitted on some SRS resources (namely, the first resource unit in this embodiment of this application) to be used to estimate a downlink channel state, and configure an SRS signal (namely, the second SRS in this embodiment of this application) transmitted on some other SRS resources (namely, the second resource unit in this embodiment of this application) to be used to estimate an uplink channel state.

Optionally, the first resource unit and the second resource unit are determined based on at least one of the following information: a quantity of accessed users, a periodicity of the first signal, a periodicity of the second signal, a data amount of uplink data, and a data amount of a downlink channel. For ease of understanding of embodiments of this application, an example in which the second apparatus divides SRS resources to determine the first resource unit and the second resource unit is used. For example, the second apparatus configures time domain positions of the SRS resources as N symbols in one slot in one subframe in each of a plurality of radio frames, and the N symbols are sent through frequency hopping. In other words, N different symbols correspond to N different subbands (subbands), where N is a positive integer.

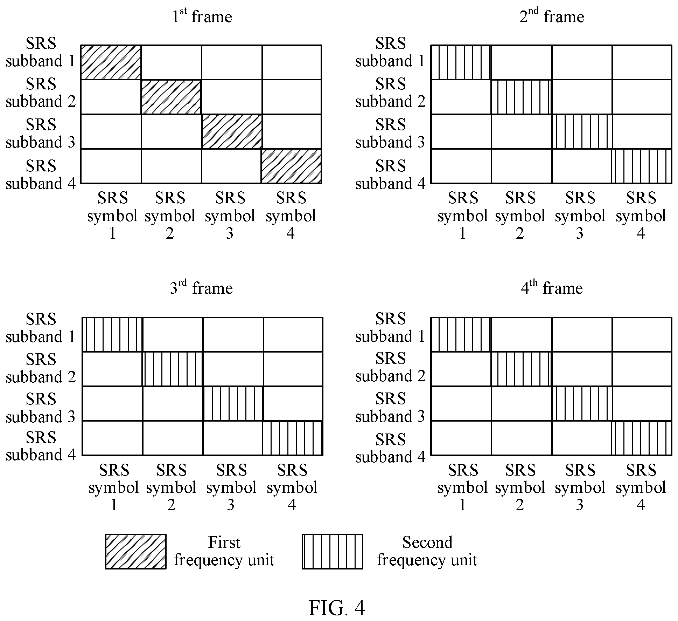

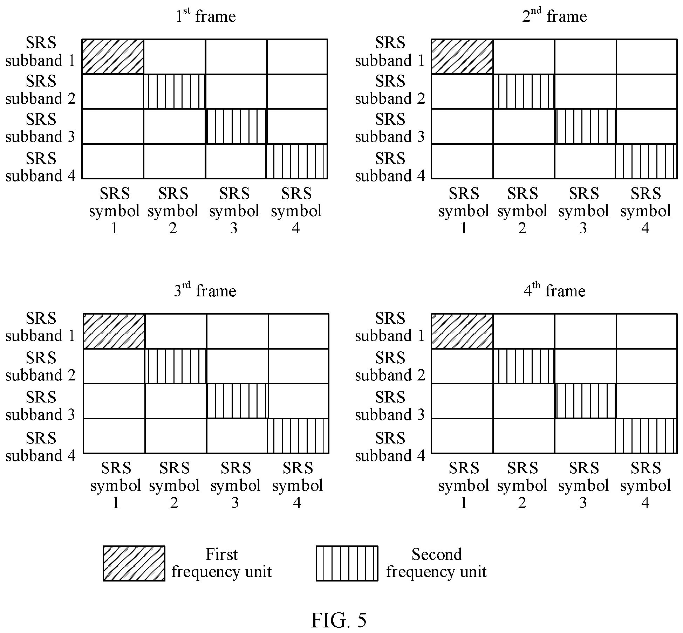

For example, when a quantity of accessed users in a cell is less than or equal to a preset quantity threshold, the second apparatus may perform division based on a granularity of a radio frame. For example, refer to FIG. 4, SRS resources in a 1^{st} radio frame are used as a first resource unit, and SRS resources in a 2^{nd} radio frame to a 4^{th} radio frame are used as a second resource unit. When the quantity of users in the cell is greater than the preset quantity threshold, the second apparatus may perform division based on a granularity of a symbol (or a subband). In other words, one or more symbols (or subbands) in a radio frame are divided into the first resource unit, and one or more other symbols (or subbands) in the radio frame are divided into the second resource unit. For example, refer to FIG. 5, a 1^{st} symbol in each of a 1^{st} frame to a 4^{th} frame is divided into the first resource unit, and a 2^{nd} symbol to a 4^{th} symbol are divided into the second resource unit.

For another example, the second apparatus determines, based on a periodicity of an SRS, a manner of division between the first resource unit and the second resource unit, where the periodicity of the first signal and the periodicity of the second signal may be represented as the periodicity of the SRS. When the periodicity of the SRS is less than or equal to a preset periodicity threshold, the second apparatus may perform division based on a granularity of a radio frame. When the periodicity of the SRS is greater than the preset periodicity threshold, the second apparatus may perform division based on a granularity of a symbol (or a subband).

For another example, the second apparatus may determine, based on a requirement of a user for uplink channel state performance and a requirement of the user for downlink channel state performance, a proportion of the first resource unit in all SRS resources. For example, when the requirement of the user for downlink channel performance is higher than the requirement for uplink channel performance, for example, when a data amount of a downlink channel is greater than a data amount of an uplink channel, the second apparatus may set the proportion of the first resource unit in all the SRS resources to be greater than a preset proportion threshold.

In a possible implementation, the second apparatus may perform division between the first resource unit and the second resource unit based on a fixed frequency domain position. For example, still refer to FIG. 5, four symbols correspond to four different SRS subbands (an SRS subband 1 to an SRS subband 4), and a ratio of the first resource unit to the second resource unit is 1:3. The second apparatus may fixedly divide an SRS subband 1 in each radio frame into the first resource unit, and fixedly divide an SRS subband 2 to an SRS subband 4 in each radio frame into the second resource unit.

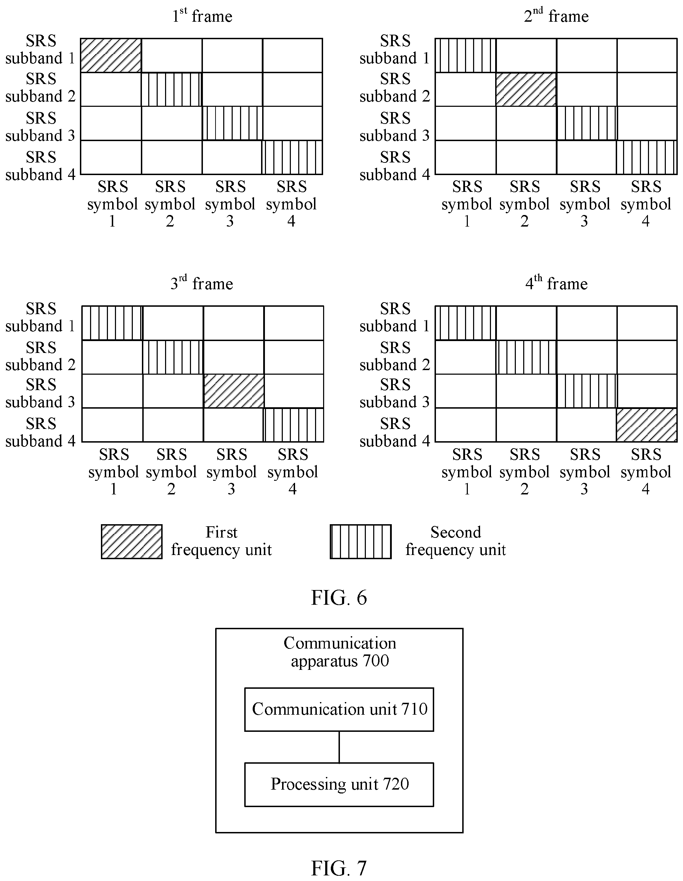

In another possible implementation, the first resource unit and the second resource unit include at least one same sub-frequency unit in frequency domain, where the sub-frequency unit may be at least one SRS subband included in an SRS resource. For example, refer to FIG. 6, if four symbols are configured in each radio frame for transmitting SRSs, the four symbols correspond to four different SRS subbands (an SRS subband 1 to an SRS subband 4), and a ratio of the second resource unit to the first resource unit is 1:3, the second apparatus may perform division by using four radio frames as one periodicity, divide an SRS subband 1 in a 1^{st} radio frame, an SRS subband 2 in a 2^{nd} radio frame, an SRS subband 3 in a 3^{rd} radio frame, and an SRS subband 4 in a 4^{th} radio frame into the second resource unit, and divide other SRS resources in the four radio frames into the first resource unit. In this way, the first resource unit and the second resource unit each may traverse all the subbands included in all the SRS resources, so that accuracy of channel estimation can be improved.

It should be noted that FIG. 4 to FIG. 6 are merely used as examples for ease of understanding of embodiments of this application. A quantity of symbols and a quantity of subbands configured for the SRS resource are not specially limited in this application. Symbols and subbands in the SRS resource may be contiguous or non-contiguous. In other words, a symbol location and a subband location configured for the SRS resource are not specially limited in this application.

It should be further noted that, the manner of division between the first resource unit and the second resource unit by the second apparatus is not specially limited in embodiments of this application. In other words, embodiments of this application further include another division manner based on a resource granularity. For example, when one subband includes a plurality of resource blocks (resource block, RB), the second apparatus may alternatively divide one or more RBs in one subband into the first resource unit, and divide other RBs in the subband into the second resource unit.

The first information may indicate, by indicating the time domain position and the frequency domain position of the first resource unit, the first apparatus to perform the first processing on the first signal transmitted on the first resource unit. For example, the first signal may include at least one of the following information of a first frequency unit: a frame number, a subframe number, a slot number, a symbol number, a comb number, and an RB index.

For example, if division between the first frequency unit and a second frequency unit is performed based on a granularity of a radio frame, the first information may indicate a resource location of the first frequency unit by indicating the frame number. For another example, if division between the first frequency unit and the second frequency unit is performed based on a granularity of a symbol (or a granularity of a subband), the first information may indicate a location of the first frequency unit by indicating the frame number, the slot number, and the symbol number. Alternatively, when different symbols correspond to different subbands, the first information may indicate a resource location of the first frequency unit by indicating the comb number.

Optionally, the first information further indicates the time domain position and the frequency domain position of the second resource unit. For example, the first information may further include at least one of the following information of the second frequency unit: a frame number, a subframe number, a slot number, a symbol number, a comb number, and an RB index. In this way, the first apparatus may determine, based on the first information, a resource on which a signal is the first signal used to estimate a downlink channel, and a resource on which a signal is the second signal used to estimate an uplink channel.

S320: The second apparatus sends the first information to the first apparatus.

Correspondingly, the first apparatus receives the first information from the second apparatus.

The second apparatus may send the first information to the first apparatus through a CPRI interface, an eCPRI interface, or a fronthaul interface of another type.

S330: The first apparatus performs the first processing on the first signal, and performs the second processing on the second signal.

The first apparatus may receive a plurality of signals through an antenna. The plurality of signals may have different functions. The plurality of signals include the first signal and the second signal. The first apparatus determines, based on the first information, to use different processing manners for the first signal and the second signal, that is, to perform the first processing on the first signal and perform the second processing on the second signal. The second processing includes processing for suppressing a PIM interference signal, and the first processing may not include processing for suppressing a PIM interference signal.

A second processing manner of the second signal may be preset by the first apparatus and the second apparatus. In other words, the second apparatus may process, in a preset manner, a signal (including the second signal) other than the first signal indicated by the first information. Alternatively, the first apparatus indicates, to the second apparatus, a second processing manner of the second signal. This is not specially limited in this application.

Optionally, the first processing includes processing other than processing for suppressing a PIM interference signal in the second processing. For example, the second processing may include the processing for suppressing the PIM interference signal in the second signal, processing used to convert the second signal from time domain to frequency domain, processing used to convert the second signal from frequency domain to beam domain, channel separation processing based on each subband in frequency domain, and the like. The beam domain may indicate that a phase changes with a spatial location, and channel separation may mean that data carried in different channels such as a physical layer shared channel and a physical layer control channel is separated. Similarly, the first processing may include processing used to convert the first signal from time domain to frequency domain, processing used to convert the first signal from frequency domain to beam domain, channel separation processing based on each subband in frequency domain, and the like. A processing function other than suppressing the PIM interference signal included in the first processing and the second processing is related to functions of the first apparatus and the second apparatus. This is not specially limited in this application.

It should be noted that processing for suppressing a PIM interference signal is not specially limited in this application. The processing may be designed based on a feature of the PIM interference signal, for example, processing such as eliminating a signal component in a direction or eliminating a component of a frequency.

In embodiments of this application, the first apparatus may be used as an execution body of uplink channel state estimation and downlink channel state estimation (referred to as Manner 1 below). For example, when an interface between the first apparatus and the second apparatus is an eCPRI Cat D/E shown in FIG. 2, the first apparatus may perform channel state estimation. Alternatively, the second apparatus may be used as an execution body of uplink channel state estimation and downlink channel state estimation (referred to as Manner 2 below). For example, when an interface between the first apparatus and the second apparatus is an eCPRI Cat C/F/A/B or a CPRI shown in FIG. 2, the second apparatus may perform channel state estimation. When Manner 1 is used, the method may further include step S340A after step S330. When Manner 2 is used, the method may further include step S340B and step S350B after step S330. The following separately describes the two manners.

### Manner 1:

Optionally, S340A: The first apparatus performs downlink channel state estimation based on a first signal obtained through the first processing, and performs uplink channel state estimation based on a second signal obtained through the second processing.

The first apparatus may measure the first signal obtained through the first processing, perform downlink channel state estimation based on a measurement result, measure the second signal obtained through the second processing, and perform uplink channel state estimation based on a measurement result.

It may be understood that, based on different functions of the first signal and the second signal, measurement parameters of the first signal obtained through the first processing and the second signal obtained through the second processing by the first apparatus are also different.

For example, the measurement result of the first signal obtained through the first processing may include at least one of the following content: a reference signal received power (reference signal received power, RSRP), an angle of arrival, a separation angle, channel covariance, a predefined weight index, and the like. The foregoing parameters may be used to generate downlink channel state information, and may be used to select a preferred downlink beam for downlink data transmission.

For example, the measurement result of the second signal obtained through the second processing may include at least one of the following content: an RSRP, a signal to noise ratio (signal to noise ratio, SNR), a signal to interference plus noise ratio (signal to interference plus noise ratio, SINR), and the like.

It should be noted that, specific measurement parameters of the first signal and the second signal are not specially limited in this application. For example, the second apparatus may further measure parameters such as received signal strength (received signal strength indication, RSSI) and reference signal received quality (reference signal received quality, RSRQ) of the first signal obtained through the first processing and the second signal obtained through the second processing.

It should be further noted that, even if the measurement result of the first signal obtained through the first processing and the measurement result of the second signal obtained through the second processing each include a measurement parameter of a same type, for example, an RSRP, the second apparatus may perform measurement in different manners. For example, when measuring the second signal obtained through the second processing and used to estimate the uplink channel, a second device may measure an RSRP corresponding to each antenna, and when measuring the first signal obtained through the first processing and used to estimate the downlink channel, the second device may measure an RSRP corresponding to a plurality of antennas that are aggregated. This is not specially limited in this application.

### Manner 2:

Optionally, S340B: The first apparatus sends, to the second apparatus, a first signal obtained through the first processing and a second signal obtained through the second processing.

Correspondingly, the second apparatus receives, from the first apparatus, the first signal obtained through the first processing and the second signal obtained through the second processing.

The first apparatus may send, to the first apparatus through the CPRI interface, an eCPRI interface, or a fronthaul interface of another type, the first signal obtained through the first processing and the second signal obtained through the second processing.

Optionally, S350B: The second apparatus performs downlink channel state estimation based on the first signal obtained through the first processing, and performs uplink channel state estimation based on the second signal obtained through the second processing.

A manner in which the second apparatus performs measurement is similar to the manner in which the second apparatus performs measurement. For details, refer to the descriptions in step S340A. Details are not described herein again.

Based on this technical solution, the second apparatus may indicate, by using the first information, the first apparatus to perform the first processing on the first signal used to estimate the downlink channel state, so that the first apparatus does not process all signals in a uniform manner. In other words, the first apparatus can use different processing manners for the first signal used for the downlink channel state and the second signal used for the uplink channel state, for example, the second processing includes processing for suppressing the PIM interference signal in the second signal, so that signal processing flexibility can be improved.

The foregoing describes the signal processing method provided in embodiments of this application. The following describes a communication apparatus provided in embodiments of this application with reference to FIG. 4 to FIG. 6. In a possible implementation, the communication apparatus is configured to implement the steps or procedures corresponding to the first apparatus in the foregoing method embodiments. In another possible implementation, the communication apparatus is configured to implement the steps or procedures corresponding to the second apparatus in the foregoing method embodiments.

FIG. 7 is a block diagram of a communication apparatus 700 according to an embodiment of this application. As shown in FIG. 7, the apparatus 700 may include a communication unit 710 and a processing unit 720. The communication unit 710 may communicate with the outside, and the processing unit 720 is configured to process data. The communication unit 710 may also be referred to as a communication interface or a transceiver unit.

In a possible design, the apparatus 700 may implement steps or procedures corresponding to a sending end device in the foregoing method embodiments. The processing unit 720 is configured to perform a processing-related operation of the sending end device in the foregoing method embodiments, and the communication unit 710 is configured to perform a sending-related operation of the sending end device in the foregoing method embodiments.

In another possible design, the apparatus 700 may implement steps or procedures corresponding to a receiving end device in the foregoing method embodiments. The communication unit 710 is configured to perform a receiving-related operation of the receiving end device in the foregoing method embodiments, and the processing unit 720 is configured to perform a processing-related operation of the receiving end device in the foregoing method embodiments.

It should be understood that the apparatus 700 is presented in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 700 may specifically be the sending end device in the foregoing embodiments, and may be configured to perform procedures and/or steps corresponding to the sending end device in the foregoing method embodiments. Alternatively, the apparatus 700 may specifically be the receiving end device in the foregoing embodiments, and may be configured to perform procedures and/or steps corresponding to the receiving end device in the foregoing method embodiments. To avoid repetition, details are not described herein again.

The apparatus 700 in each of the foregoing solutions has a function of implementing steps corresponding to steps performed by the sending end device according to the foregoing method, or the apparatus 700 in each of the foregoing solutions has a function of implementing steps corresponding to steps performed by the receiving end device according to the foregoing method. The function may be implemented by hardware, or may be implemented by hardware executing corresponding software. The hardware or software includes one or more modules corresponding to the foregoing function. For example, the communication unit may be replaced with a transceiver (for example, a sending unit of the communication unit may be replaced with a transmitter, and a receiving unit of the communication unit may be replaced with a receiver), and another unit such as the processing unit may be replaced with a processor, to separately perform the sending and receiving operations and the processing-related operations in the method embodiments.

In addition, the communication unit may alternatively be a transceiver circuit (for example, may include a receiving circuit and a sending circuit), and the processing unit may be a processing circuit. In this embodiment of this application, the apparatus in FIG. 7 may be the AP or the STA in the foregoing embodiments, or may be a chip or a chip system, for example, a system on chip (system on chip, SoC). The communication unit may be an input/output circuit or a communication interface. The processing unit is a processor, a microprocessor, or an integrated circuit integrated on the chip. This is not limited herein.

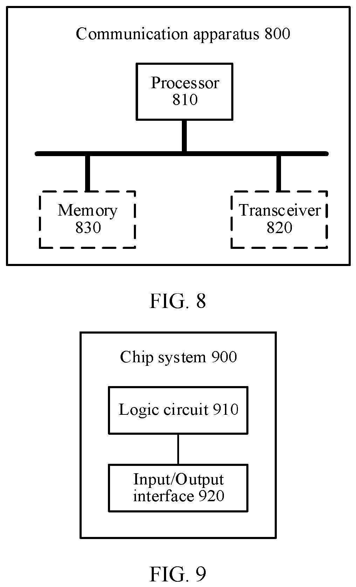

FIG. 8 is a block diagram of a communication apparatus 800 according to an embodiment of this application. The apparatus 800 includes a processor 810 and a transceiver 820. The processor 810 and the transceiver 820 communicate with each other through an internal connection path, and the processor 810 is configured to execute instructions, to control the transceiver 820 to send a signal and/or receive a signal.

Optionally, the apparatus 800 may further include a memory 830. The memory 830 communicates with the processor 810 and the transceiver 820 through an internal connection path. The memory 830 is configured to store instructions, and the processor 810 may execute the instructions stored in the memory 830. In a possible implementation, the apparatus 800 is configured to implement procedures and steps corresponding to a sending end device in the foregoing method embodiments. In another possible implementation, the apparatus 800 is configured to implement procedures and steps corresponding to a receiving end device in the foregoing method embodiments.

It should be understood that the apparatus 800 may be specifically the sending end device or the receiving end device in the foregoing embodiments, or may be a chip or a chip system. Correspondingly, the transceiver 820 may be a transceiver circuit of the chip. This is not limited herein. Specifically, the apparatus 800 may be configured to perform steps and/or procedures corresponding to the sending end device or the receiving end device in the foregoing method embodiments. Optionally, the memory 830 may include a read-only memory and a random access memory, and provide instructions and data to the processor. A part of the memory may further include a non-volatile random access memory. For example, the memory may further store information of a device type. The processor 810 may be configured to execute the instructions stored in the memory; and when the processor 810 executes the instructions stored in the memory, the processor 810 is configured to perform steps and/or procedures corresponding to the sending end device or the receiving end device in the foregoing method embodiments.

In an implementation process, the steps in the foregoing method may be implemented by using a hardware integrated logical circuit in the processor or by using instructions in a form of software. The steps in the method disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that the processor in embodiments of this application may be an integrated circuit chip, and has a signal processing capability. In an implementation process, the steps in the foregoing method embodiments may be implemented by using a hardware integrated logical circuit in the processor, or by using instructions in a form of software. The processor may be a general purpose processor, a digital signal processor (DSP), an application-specific integrated circuit (ASIC), a field programmable gate array (FPGA) or another programmable logic device, a discrete gate or a transistor logic device, or a discrete hardware component. The processor in embodiments of this application may implement or perform the method, the steps, and the logical block diagrams that are disclosed in embodiments of this application. The general purpose processor may be a microprocessor, or the processor may be any conventional processor or the like. The steps in the methods disclosed with reference to embodiments of this application may be directly performed by a hardware decoding processor, or may be performed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through exemplary but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a sync link dynamic random access memory (synchlink DRAM, SLDRAM), and a direct rambus random access memory (direct rambus RAM, DR RAM) may be used. It should be noted that the memory of the systems and methods described in this specification includes but is not limited to these memories and any memory of another appropriate type.

It should be noted that, when the processor is a general purpose processor, a DSP, an ASIC, an FPGA or another programmable logic device, a discrete gate or a transistor logic device, or a discrete hardware component, the memory (a storage module) may be integrated into the processor. It should be further noted that the memory described in this specification is intended to include, but is not limited to, these memories and any memory of another appropriate type.

FIG. 9 is a diagram of a chip system 900 according to an embodiment of this application. The chip system 900 (or may be referred to as a processing system) includes a logic circuit 910 and an input/output interface (input/output interface) 920.

The logic circuit 910 may be a processing circuit in the chip system 900. The logic circuit 910 may be coupled to a storage unit, and invoke instructions in the storage unit, so that the chip system 900 may implement the methods and functions in embodiments of this application. The input/output interface 920 may be an input/output circuit in the chip system 900, and outputs information processed by the chip system 900, or inputs to-be-processed data or signaling to the chip system 900 for processing.

Specifically, for example, if the chip system 900 is installed on a sending end device, the logic circuit 910 is coupled to the input/output interface 920, the logic circuit 910 may send a first frame through the input/output interface 920, and the first frame may be generated by the logic circuit 910. For another example, if the chip system 900 is installed on a receiving end device, the logic circuit 910 is coupled to the input/output interface 920, the logic circuit 910 may receive the first frame through the input/output interface 920, and the logic circuit 910 determines a maximum sending power PSD based on the first frame.

In a solution, the chip system 900 is configured to implement the operations performed by the sending end device in the foregoing method embodiments.

For example, the logic circuit 910 is configured to implement a processing-related operation performed by the sending end device in the foregoing method embodiments, for example, a processing-related operation performed by the sending end device in embodiments shown in FIG. 3 to FIG. 6. The input/output interface 920 is configured to implement a sending-related operation and/or a receiving-related operation performed by the sending end device in the foregoing method embodiments, for example, a processing-related operation performed by the sending end device in embodiments shown in FIG. 3 to FIG. 6.

In another solution, the chip system 900 is configured to implement the operations performed by the receiving end device in the foregoing method embodiments.

For example, the logic circuit 910 is configured to implement a processing-related operation performed by the receiving end device in the foregoing method embodiments, for example, a processing-related operation performed by the receiving end device in embodiments shown in FIG. 3 to FIG. 6. The input/output interface 920 is configured to implement a sending-related operation and/or a receiving-related operation performed by the receiving end device in the foregoing method embodiments, for example, a processing-related operation performed by the receiving end device in embodiments shown in FIG. 3 to FIG. 6.

In addition, this application further provides a computer-readable storage medium. The computer-readable storage medium stores computer instructions, and when the computer instructions are run on a computer, the operations and/or procedures performed by the sending end device or the receiving end device in the method embodiments of this application are performed.

This application further provides a computer program product. The computer program product includes computer program code or instructions. When the computer program code or the instructions are run on a computer, the operations and/or procedures performed by the sending end device or the receiving end device in the method embodiments of this application are performed.

In addition, this application further provides a communication system, including the sending end device and the receiving end device in embodiments of this application.

It should be further noted that the memory described in this specification is intended to include, but is not limited to, these memories and any memory of another appropriate type.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art can use different methods to implement the described functions for each particular application, but it should not be considered that the implementation goes beyond the scope of this application. It may be clearly understood by a person skilled in the art that, for the purpose of convenient and brief description, for a detailed working process of the foregoing system, apparatus, and unit, refer to a corresponding process in the foregoing method embodiments. Details are not described herein again. In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms. The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments. In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for indicating a computer device (which may be a personal computer, a server, or a network device) to perform all or a part of the steps of the methods described in embodiments of this application. The foregoing storage medium includes any medium that can store program code, such as a USB flash disk, a mobile hard disk, a ROM, a RAM, a magnetic disk, or an optical disc.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments by using any appropriate manner.

It should be further understood that ordinal numbers such as "first" and "second" in embodiments of this application are for distinguishing between a plurality of objects, but are not intended to limit a size, content, an order, a time sequence, priorities, importance of the plurality of objects, or the like. For example, first information and second information do not indicate a difference in an information amount, content, a priority, importance, or the like.

It should be further understood that, in this application, both "when" and "if" mean that a network element performs corresponding processing in an objective situation, but do not constitute a limitation on time, do not require that the network element has a determining action during implementation, and do not mean other limitations either.

It should be further understood that in this application, "at least one" means one or more, and "a plurality of" means two or more. "At least one of items (pieces)" or a similar expression thereof refers to one item (piece) or a plurality of items (pieces), that is, any combination of these items, including any combination of singular items (pieces) or plural items (pieces). For example, at least one of a, b, or c may represent a, b, c, a and b, a and c, b and c, or a, b, and c.

It should be further understood that, unless otherwise specified, a meaning similar to "an item includes one or more of the following: A, B, and C" in this application usually means that the item may be any one of the following: A; B; C; A and B; A and C; B and C; A, B, and C; A and A; A, A, and A; A, A, and B; A, A, and C; A, B, and B; A, C, and C; B and B; B, B, and B; B, B, and C; C and C; C, C, and C; and other combinations of A, B, and C. The foregoing uses three elements A, B, and C as an example to describe an optional case of the item. When an expression is "an item includes at least one of the following: A, B, ..., and X", in other words, more elements are included in the expression, a case to which the item is applicable may also be obtained according to the foregoing rule.

It should be further understood that, the term "and/or" in this application merely describes an association relationship between associated objects, and represents that three relationships may exist. For example, A and/or B may represent the following cases: A exists alone, both A and B exist, and B exists alone, where A and B may be singular or plural. The character "/" generally indicates an "or" relationship between the associated objects. For example, A/B indicates A or B.

It should be further understood that in embodiments of this application, "B corresponding to A" indicates that B is associated with A, and B may be determined based on A. However, it should be further understood that determining B based on A does not mean that B is determined based only on A. B may alternatively be determined based on A and/or other information.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A signal processing method, wherein the method comprises:
receiving first information, wherein the first information indicates to perform first processing on a first signal transmitted on a first resource unit, and the first signal is used to estimate a downlink channel state; and
performing the first processing on the first signal, and performing second processing on a second signal transmitted on a second resource unit, wherein the second signal is used to estimate an uplink channel state, the second processing comprises processing for suppressing a passive intermodulation interference signal in the second signal, and the first processing and the second processing are different processing manners.

2. The method according to claim 1, wherein the first processing does not comprise processing for suppressing a passive intermodulation interference signal in the first signal.

3. The method according to claim 1 or 2, wherein the first resource unit and the second resource unit comprise at least one same sub-frequency unit in frequency domain.

4. The method according to any one of claims 1 to 3, wherein the method further comprises:
performing downlink channel state estimation based on a first signal obtained through the first processing; and
performing uplink channel state estimation based on a second signal obtained through the second processing.

5. The method according to any one of claims 1 to 3, wherein the method further comprises:
sending a first signal obtained through the first processing and a second signal obtained through the second processing.

6. The method according to any one of claims 1 to 5, wherein the first resource unit and the second resource unit are determined based on at least one of the following information: a quantity of accessed users, a periodicity of the first signal, a periodicity of the second signal, a data amount of uplink data, and a data amount of downlink data.

7. The method according to any one of claims 1 to 6, wherein the first information indicates a time domain position and a frequency domain position of the first resource unit, and a time domain position and a frequency domain position of the second resource unit.

8. The method according to any one of claims 1 to 7, wherein the first signal comprises a first sounding reference signal, and the second signal comprises a second sounding reference signal.

9. A signal processing method, wherein the method comprises:
generating first information, wherein the first information indicates to perform first processing on a first signal transmitted on a first resource unit, the first signal is used to estimate a downlink channel state, the first processing and second processing on a second signal transmitted on a second resource unit are different processing manners, the second signal is used to estimate an uplink channel state, and the second processing comprises processing for suppressing a passive intermodulation interference signal in the second signal; and
sending the first information.

10. The method according to claim 9, wherein the first processing does not comprise processing for suppressing a passive intermodulation interference signal in the first signal.

11. The method according to claim 9 or 10, wherein the first resource unit and the second resource unit comprise at least one same sub-frequency unit in frequency domain.

12. The method according to any one of claims 9 to 11, wherein the method further comprises:
receiving a first signal obtained through the first processing and a second signal obtained through the second processing;
performing downlink channel state estimation based on the first signal obtained through the first processing; and
performing uplink channel state estimation based on the second signal obtained through the second processing.

13. The method according to any one of claims 9 to 12, wherein the first resource unit and the second resource unit are determined based on at least one of the following information: a quantity of accessed users, a periodicity of the first signal, a periodicity of the second signal, a data amount of uplink data, and a data amount of downlink data.

14. The method according to any one of claims 9 to 13, wherein the first information indicates a time domain position and a frequency domain position of the first resource unit, and a time domain position and a frequency domain position of the second resource unit.

15. The method according to any one of claims 9 to 14, wherein the first signal comprises a first sounding reference signal, and the second signal comprises a second sounding reference signal.

16. A signal processing method, wherein the method comprises:
generating, by a second apparatus, first information, wherein the first information indicates to perform first processing on a first signal transmitted on a first resource unit, and the first signal is used to estimate a downlink channel state;
sending, by the second apparatus, the first information to the first apparatus; and
performing, by the first apparatus, the first processing on the first signal, and performing second processing on a second signal transmitted on a second resource unit, wherein the second signal is used to estimate an uplink channel state, the second processing comprises processing for suppressing a passive intermodulation interference signal in the second signal, and the first processing and the second processing are different processing manners.

17. A communication apparatus, comprising a module configured to perform the method according to any one of claims 1 to 8.

18. A communication apparatus, comprising a module configured to perform the method according to any one of claims 9 to 15.

19. A communication apparatus, comprising a processor, configured to execute a computer program stored in a memory, to enable the communication apparatus to perform the method according to any one of claims 1 to 8, or to enable the communication apparatus to perform the method according to any one of claims 9 to 15.

20. A computer-readable storage medium, wherein the computer-readable storage medium stores a computer program, and when the computer program is run on a computer, the computer is enabled to perform the method according to any one of claims 1 to 8, or the computer is enabled to perform the method according to any one of claims 9 to 15.

21. A computer program product, comprising computer program code, wherein when the computer program code is run on a computer, the computer is enabled to implement the method according to any one of claims 1 to 8, or the computer is enabled to implement the method according to any one of claims 9 to 15.

22. A communication system, comprising the communication apparatus according to claim 17 and the communication apparatus according to claim 18.
